# EUROPEAN PATENT SPECIFICATION

(11) **EP 3 209 963 B1**
(45) Date of publication and mention of the grant of the patent: **18.12.2019**
(21) Application number: 15852365.4
(22) Date of filing: 20.10.2015
(51) Int. Cl.: F27D 3/00, F27B 14/08, F27B 14/10, C21C 1/08, C21C 5/52, C21C 7/00, C22C 33/04, C22C 33/08, B22D 41/08

(54) **A METHOD FOR PREPARING RAW MATERIAL FOR CASTING IRON OR STEEL**
VERFAHREN ZUR HERSTELLUNG VON ROHMATERIALIEN ZUM GUSS VON EISEN ODER STAHL
PROCÉDÉ DE PRÉPARATION D'UNE CHARGE POUR COULER DU FER OU DE L'ACIER

(30) Priority: 20.10.2014 FI 20145919
(43) Date of publication of application: 30.08.2017
(73) Proprietor: Meehanite Worldwide Corporation Inc., Passaic, NJ 07055 (US)
(72) Inventor: KEMPPAINEN, Pekka, 04200 Kerava (FI)
(74) Representative: Berggren Oy, Tampere
(86) International application number: PCT/FI2015/050711
(87) International publication number: WO 2016/062922

(56) References cited:
- WO-A1-03/106717
- WO-A1-2008/032423
- DE-A1- 19 923 197
- ES-T3- 2 285 456
- GB-A- 332 656
- GB-A- 332 656
- US-A- 3 674 444
- KESKINEN, R. ET AL.: 'VALUATLAS & TAMPEREEN AMMATTIOPISTO - VALUMETALLIEN SULATUS - 2.' SULATTAMISEN PERIAATE. XP009502423 Retrieved from the Internet: <URL:HTTP://WWW/.VALUATLAS. FI /TIETOMAT/KOOSTEET/ SULATUS_TAO/SULATUSPN_02.HTML> [retrieved on 2015-05-19]

## Description

### Field of the invention

The present application relates to a method for casting iron or steel, wherein a charge containing the raw materials and alloying components for the object to be cast is melted down and cast to form an object having a desired shape and composition. The present application also discloses a charge for use in this method. The present application further discloses a method for producing such a charge.

### Background of the invention

Steel and iron pieces of high dimensional precision are made in foundries by melting a charge that contains metal raw material and by pouring the molten metal into a mould. The charge is normally made by placing metal material, which may take a variety of forms and comprise, for example, scrap metal and surplus pieces, such as parts of casting channels, rejected castings, and surplus iron or steel, in a furnace. The casting is a metal alloy having a carefully selected composition. To achieve this composition, the alloying components, such as carbon, silicon, copper, chromium, molybdenum, and nickel, as well as the other alloying components are normally dosed to the charge in the form of a powder that contains said alloying component.

Preparing the charge for casting requires precise calculation and weighing, to achieve the desired metal alloy. The metal raw materials come from a variety of sources, and their composition and shape may vary. Alloying components used in lower contents have to be specially ordered to the foundry in various packages, such as sacks; they have to be stored; and the packages have to be handled when preparing the charge, which takes storage space and time.

When preparing the charge, the furnace is often not filled up to its full capacity, because various pieces used as raw material take space. Thus, the full capacity of the furnace cannot be utilized, or the furnace has to be oversized with respect to the mass of the charge and the casting. The progress of the melting of the charge is unpredictable because of the heterogeneity of the raw materials and the variation in the degree of filling with the charges, which is why the charge is often examined directly visually by lifting the lid of the furnace, which causes energy losses and also takes working time.

Moreover, most of the commonly used materials to be molten, particularly recycled metal, *i.e.* scrap, and most ingot materials and alloying components susceptible to oxidation contain undesired elements, dirt, oxidized material, and slag produced during the manufacture.

In foundries, in which the aim is to produce a casting with a precise composition, it is a common problem that the calculation of the composition of the charge requires a lot of work, due to the variety of the raw material. Moreover, a large "scrap yard" for raw material and storage space for the alloying components is needed at the foundry. Because the alloying components are expensive, a lot of money must be invested in their storage. Patent documents US3674444, WO2008032423 also disclose methods and/or apparatuses for preparing raw material to be charged in a furnace during the iron or steel making process.

### Summary of the invention

It is an aim of the invention to present a casting method, by which the casting of iron or steel, particularly with respect to the preparation of the charge for casting, can be performed more quickly and easily with equal or higher precision. It is also an aim of the invention to present a new type of a charge for casting, by which the method can be implemented, as well as a method for producing such a charge for casting.

The present application provides a method for preparing raw material for casting iron or steel, wherein a charge containing raw materials for a casting is melted and cast into an object of desired shape, wherein the charge (1) is assembled of plate-like charge elements (1a, 1b, 1c...) with known compositions and dimensions by placing them on top of each other, and of an alloying component entity (2) with a known composition by means of which the composition of the charge is balanced to the desired precise composition, wherein the plate-like charge elements (1a, 1b, 1c...) are disc-like elements provided with a central hole, and wherein the disc-like elements are stacked on top of each other around a vertical guiding element so that the vertical guiding element extends through the holes.

The charge to be placed in the furnace may be assembled of plate-like charge elements manufactured according to the dimensions of the melting furnace and having known compositions by placing them on top of each other, and of alloying component pieces or an alloying component cartridge having a known composition, by means of which the composition of the charge is balanced to the desired precise composition.

The furnace can be filled more efficiently, and the work relating to the preparation of the casting (filling of the furnace, calculation of the composition of the charge for casting, the addition of alloying components, and the recording of the charge content) is facilitated and performed in a shorter time. Similarly, the actual melting process is more predictable, providing savings in time and energy.

In one example, the raw materials for the charge are molten in a furnace, particularly in an induction furnace or electric arc furnace, and purified preferably in a vacuum oxygen decarburizer converter (VODC) or in argon oxygen decarburizer (AOD) converter. When the parts for the charge, *i.e.* the charge elements (plates or discs), are made from a melt purified in the converter, impurities can be removed and the composition can be made precise.

In yet another example, the alloying components used are chemical elements which are as pure as possible, instead of typical ferro alloys, whereby oxidation is avoided during the production of the alloying component. The product is a casting which is free from inclusions and surface defects and, because it has a smaller variation in properties, it can be designed with a narrower deviation in properties as well as with higher strength, fatigue durability and corrosion resistance properties.

All in all, the costs for the preparation, transportation and storage of the charge and the alloying components are lower than the costs for raw materials and alloying components which have to be prepared, transported, stored, and charged separately.

Moreover, to make the final melt composition as precise as one desires is more certain and easier than in the conventional way of weighing and charging the raw materials and the alloying components one by one.

It is possible to make very pure steel grades in foundries with no equipment for purifying the raw material, because the manufacturer of the charge elements can have such equipment, for example a converter, for purifying the raw material used for the charge elements.

Because the foundries can acquire the raw materials (charge elements) in a compact form and the alloying components according to the demand for alloying components known in advance, the work and storage needed at the foundry is significantly reduced.

Other advantageous embodiments of the invention will be disclosed in the following description.

### Description of the drawings

In the following, the method will be described in more detail with reference to the appended drawings, in which
- Fig. 1: shows a vertical cross section of a charge for casting, placed in a furnace,
- Fig. 2: illustrates the method for producing a charge for casting, and
- Fig. 3: is a chart showing the different steps of the production of a charge for casting.

### Detailed description

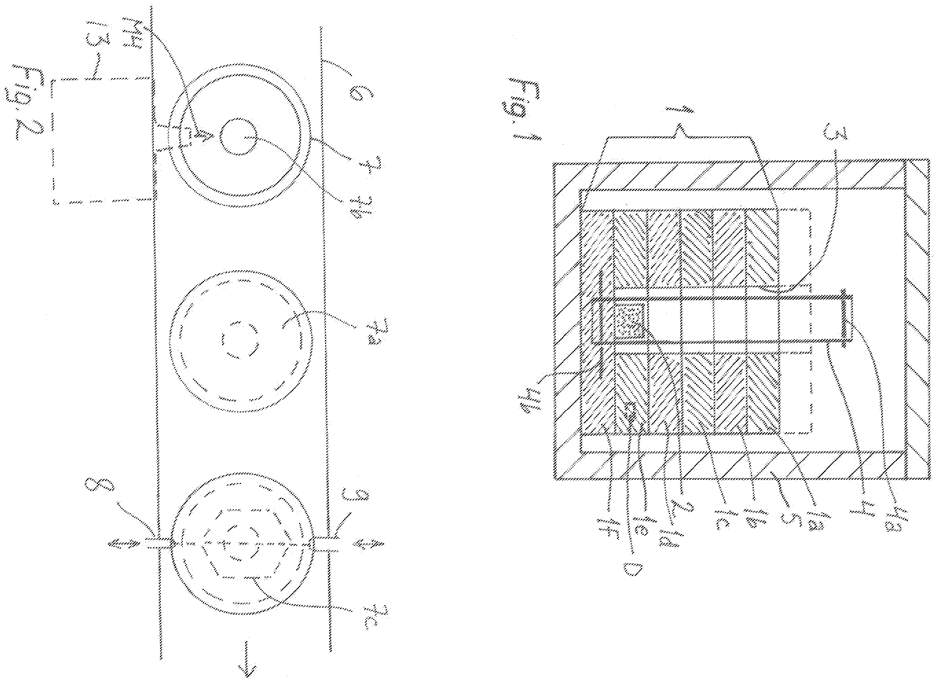

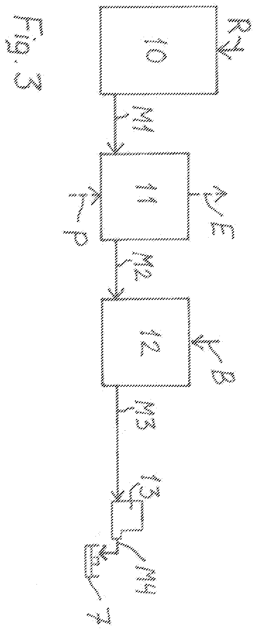

Figure 1 shows a casting charge 1 consisting primarily of metals and placed in a furnace 5; the production of its elements will be described below with reference to Figs. 2 and 3. The charge is melted down in the furnace 5 by any known method, after which the casting is performed by guiding the molten material to a mould corresponding to the shape of the casting. Iron has the highest weight percentage of the raw materials. The casting process is iron casting or steel casting, depending on the composition of the charge.

The charge 1 comprises charge elements 1a, 1b, 1c... stacked on top of each other, each having a composition that is known precisely. The charge elements are prefabricated by pouring a precisely calculated metal alloy into moulds of identical shapes, whereby the charge elements can be standardized to plate-like metal alloy blanks of specific dimensions, which can be placed horizontally on top of each other in a furnace to make up a charge which can be easily calculated and whose composition is precisely known.

The charge elements 1a, 1b, 1c... do not need to be identical in composition; it will suffice that the composition and mass of each elements is precisely known, because the whole charge can be easily calculated on the basis of these. It is possible to make one series of elements each having the same composition, another series of elements which have mutually identical compositions different from those of the preceding one, *etc.*

In an unclaimed embodiment of the present application, it is also possible to make a series of charge elements according to an order from a foundry, which elements make up a charge 1 of an exactly desired composition when placed in the furnace 5. Because the charge elements are equal in shape, the space utilization is efficient when filling the furnace.

However, it is an advantage that any melt left over from the manufacture of casting products, *i.e.* surplus iron or steel which had to be re-melted in any case, can be re-melted to form charge elements, and these materials can thus be converted into products that can be sold and utilized again. For example, it is possible to make charge elements within a given composition range (within given percentage limits with respect to the alloying metals and other alloying components). Thus, one option is to use surplus steel or iron, "surplus melt", from the casting of other products, in order to use it to make a series of charge elements with an accurately known composition. Said charge elements can be used in the charge for accurate casting by balancing the charge to precision with alloy component pieces or an alloy component cartridge to be placed in the furnace in addition to the charge elements.

The unclaimed method for producing charge elements is thus applicable in a foundry in which also other casting products to be sold are cast from iron or steel, because the raw materials for the charge elements are thus in the vicinity.

It is advantageous that the raw materials for the charge elements are purified of impurities and alloying components as completely as possible, so that the composition of the charge elements is known as accurately as possible after the melting, purification, and alloying of the raw materials. The method for carrying out this will be described later.

In an example not being part of a claimed embodiment, each charge element 1a, 1b, 1c... is provided with a data content that can be read by electronic equipment, the data content telling at least the composition of the charge element but also its shape and dimensions as well as the date of manufacture, and possibly other information. A reader device can be used for recording the composition of the elements, and the recorded data can be used for calculating the composition of the charge and for building up the total charge even automatically. Figure 1 shows this data content D placed inside a charge element 1e, but naturally all the charge elements 1a...1f can include said data content.

Alloying components needed in smaller contents can be placed in the furnace in the form of an entity smaller than the total mass of the charge elements 1a, 1b, 1c... In Fig. 1, reference numeral 2 indicates such an entity which can be a cartridge that contains the alloying components in a precise dosage ratio. It is also possible to use smaller separate alloying component pieces, of which each can consist of a single alloying component or contain two or more alloying components in a given mixture. When the alloying components to be placed in the furnace are in the form of a cartridge having a desired mixture ratio, as a single "alloying component charge", the alloying components exist there in the form of powder or granules. The alloying components can be one or more of the following: molybdenum, nickel, silicon, and graphite (carbon), but they can be also other metals and non-metals.

The charge elements 1a, 1b, 1c... can be fabricated in the form of pure unalloyed discs, if the desired casting product composition contains little alloying components. Thus, the variation possibilities by adding the alloying components are broader, and none of the alloying components will exceed the limit already in the charge elements. The majority of the mass of the whole charge consists of charge elements, and the function of the alloying component pieces or cartridge is only to complement the charge with respect to the alloying components, that is, to "balance" the composition of the material to be used for casting (the charge) to the exactly desired composition. The alloying component entity can also be in another form, as long as its composition is precisely known and it can be easily placed in the furnace to form a part of the casting charge.

The alloying components are also delivered to the client foundry in the same way as the charge elements; in other words, the foundry that performs the casting of the final product will get charge elements of correct size delivered in the number that corresponds to the composition and mass indicated in the order, and further, a cartridge that contains alloying component powder or grains, or alloying component pieces, while the masses and the compositions of all these constituents of the charge to be cast are precisely known.

As shown in the figure, by using charge elements 1a, 1b, 1c... dimensioned according to the order, the inner space of the furnace 5 can be better utilized. Similarly, the alloying components can be placed as a single entity 2 in the middle of the charge elements 1a, 1b, 1c... To implement this, the charge elements are plates/discs provided with a central hole. When stacked on top of each other, the plates/discs form a cavity 3 in the middle which extends in the depth direction of the furnace and in which the alloying component pieces or the alloying component cartridge are/is placed.

The charge elements can be manufactured according to the dimensions of the furnace 5 of the foundry so that their shape corresponds to the cross-section of the furnace. They can be made in the form of discs provided with a central hole and having a diameter smaller than the inner diameter of the furnace 5 so that they fit inside the furnace. The method of manufacture is shown in Fig. 2.

Figure 1 further shows a bottom plate forming one charge element 1f, on top of which the other charge elements forming the charge are stacked. An upwardly extending lifting arm 4 made of metal (steel or iron) and having its top end provided with means for fastening a lifting device (a lifting handle 4a transverse to the longitudinal direction of the arm 4) is fixed to the bottom plate. The lifting arm 4 is dimensioned so that the charge elements provided with a central hole can be placed around it so that the lifting arm 4 remains inside the cavity 3 formed by the holes. The lifting arm 4 has a tubular shape, whereby the entity 2 of alloying components (pieces or cartridge of alloying components) can be placed inside the lifting arm 4. As shown by the figure, the lifting arm 4 can be easily fastened to the bottom plate by embedding its lower end in the plate in connection with the casting. The adhesion to the material of the bottom plate can be improved by a gripping element 4b transverse to the longitudinal direction of the arm 4.

The composition formed jointly by the bottom plate and lifting arm is also precisely known, because the bottom plate and the lifting arm constitute one charge element 1f of the charge. The bottom plate and the lifting arm remain in the furnace in casting, and their material will be transferred to the composition of the finished casting product.

The charge 1 to be placed in the furnace 5 can thus be composed by stacking the charge elements 1a, 1b, 1c... on top of the lowermost charge element 1f, *i.e.* the bottom plate, and the whole stack can be lifted by the lifting arm 4 and lowered into the furnace. Figure 1 shows that the size of the charge (the number of charge elements on top of each other) is not fixed but it may be varied (there can also be more charge elements, as indicated by the broken line).

Furthermore, it is possible that the dimension of the charge elements in the charge varies in the horizontal direction, so that the profile of the charge can be accommodated to the properties of the furnace. For example, the same charge may have disc-like charge elements of different diameters on top of each other.

The above presented charge 1 can constitute the whole material of the piece to be cast, or the charge can be supplemented with pieces of varying shapes which are placed on top of the charge 1 in the furnace 5 and which may consist of surplus steel or the like having a known mass and composition.

It is easy to calculate the composition of the charge and to form the charge, because the composition and the mass of the charge elements 1a, 1b, 1c... and the possible alloying component entity 2 (alloying component pieces or cartridge) are precisely known, and the charge is easy to pile up to a compact unit and to place in the furnace.

The mass of the charge elements for the casting will depend on the dimensions and the metals used for making it, but as an example it can be said that the charge elements preferably have a mass between 100 and 600 kg (the mass of one element).

The quantity of alloying components may vary, depending on the composition of the object to be cast from the charge. Iron to be cast can typically contain about 5 wt-% of alloying components, whereas high-alloyed cast steels can contain as much as 30 wt-% of alloying components.

After the melting down of the charge, the casting can be performed by known casting methods.

As one practical example (not limiting the invention), we can give the following furnace and its charging:
Inductotherm furnace (4 tons), inner diameter of 800 mm, height of 1200 mm.

Charge elements: disc-like stackable iron or steel elements having a diameter of 700 mm, a height of 100 mm and a central hole of 200 mm. The weight of the bottom plate (lowermost charge element) 277 kg, the weight of the other charge elements (11 pieces) 255 kg, total weight 3122 kg. Lifting arm made of ductile iron, carbon steel or stainless steel, weight 40 kg, its lower end cast inside the bottom plate. In addition to the charge elements, 200 kg to 300 kg of alloying components (at least half of the total quantity of the alloying components being included in the charge elements).

Total weight of the charge about 3300 to 3500 kg.

The rest of the furnace can be filled with surplus steel or iron.

The charge elements are preferably made in the way shown in Fig. 2.

The charge elements are cast in metal moulds without sand. Inside the mould, there is a cooling channel system, into which a coolant, such as air or water, is introduced by spraying. Because of the hot metal mould, the water is converted to superheated steam which is recovered by suitable arrangements on the outlet side of the cooling channel system and conveyed to energy production. The superheated steam can be introduced to a steam turbine for the production of electricity, and after this, heat can be recovered from the steam, for example for district heating.

In connection with the casting, and in an embodiment not being part of the claimed embodiment, it is also possible to cast the above presented data element D, which is readable by electronic equipment, into the charge elements. This data element tells at least the composition, the dimensions and the time of manufacture of the element.

As shown in Fig. 2, the casting can, in practice, be implemented by filling a casting vessel 13 with a precisely measured casting batch, and by pouring the casting batch M4 into a mould 7 having a recess that corresponds to the shape of the charge element and is provided with outer edges. The mould has a central elevation 7b for forming the central hole. A lid 7a can be placed on top of the mould to insulate oxygen from the molten casting batch poured from the casting vessel into the recess of the mould.

The unclaimed method of production of charge elements can be made by sequential casting so that the moulds 7 are carried, one after the other, on a conveyor 6 stepwise past the casting vessel 13 which is each time filled with a new casting batch before the next mould 7 is moved next to the casting vessel. On the conveyor, there is also a station for cooling and for recovery of steam or hot water or hot air, for cooling the molten material in the mould and for recovering its thermal energy from the mould in the form of steam, hot air or hot water, as described above. Figure 2, which is a top view of a production line for charge elements, has a filling station with a casting vessel 13 from which a casting batch M4 is poured into a casting mould 7. In the filling station, a lid 7a is also placed on the mould. The mould covered by the lid is transferred to a cooling station where a cooling nozzle 8 is pushed from the side onto the the bottom part of the mould 7 and feeds cooling medium (for example cooling water or air) into the cooling channel system 7c in the bottom part of the mould, from where the heated cooling medium is transferred into a recovery nozzle 9 introduced from the opposite side of the mould. The recovery nozzle 9 recovers the heated cooling medium (e.g. hot air, hot water or steam) which is conveyed from the nozzle further along a duct, to be utilized in a suitable way. The cooling nozzle 8 and the recovery nozzle 9 can be arranged to move back and forth (double arrows) in suitable synchronization with the movement of the moulds 7.

Figure 3 shows the basic principle of producing a casting batch M4 which is as pure as possible, *i.e*. has a composition that is precisely known, from raw material R that contains a lot of impurities and/or has an inexact composition. To begin with, the raw material is melted in a furnace 10 in order to convert the metal material to molten form, and the first melt M1 thus obtained is conveyed to a purifying apparatus 11 where impurities E are removed from it by introducing purifying gas P into the melt. The purifying apparatus 11 is advantageously a vacuum oxygen decarburizer converter (VODC) or an argon oxygen decarburizer (AOD) converter. In either of these, oxygen is introduced as the purifying gas through the melt, to remove oxidizable elements (silicon, sulphur, titanium, vanadinium, aluminum, phosphorus, carbon) in the form of slag or gas. In the converter, gases, such as nitrogen, are also removed from possible gas inclusions in the raw material R. In the converter, argon is used as a shielding gas, or the gases formed are controlled by vacuum.

From the converter 11, purified basic melt M2 is obtained, which is led into an alloying apparatus 12 where the melt composition is subjected to exact final adjustment to correspond to the composition of the charge elements. In this step, the basic melt is alloyed with at least such alloying components which do not withstand the converter treatment, particularly carbon (C) and silicon (Si). Both of the substances are added preferably in purified form, that is, in elemental form. Carbon can be added in the form of, for example, graphite. Alloying components which are resistant to the converter treatment, such as nickel and copper, can be added already in the preceding converter, or the addition of all the alloying components can be concentrated in the alloying apparatus 12.

Melt M3 obtained from the alloying apparatus 12 and having the finished composition is used for filling the casting vessel 13, for performing the final casting of the charge elements by filling the moulds 7 with casting batches M4, as presented above. When the same melt batch is used for casting several charge elements 1a, 1b... one after the other (for example in the way shown in Fig. 2), charge elements of identical composition are obtained.

It is thus possible to perform the precision casting of the object with the final shape by using the cast charge elements in the charge, as presented above with reference to Fig. 1. This final casting can be done in the same foundry, or the charge elements can be transported to another foundry, a client foundry.

By means of the invention, it is thus possible to perform such casting of steel and iron, where the composition of the casting obtained is very exactly known. The final products are preferably acid-proof steel, stainless steel, ductile cast iron, or high-strength tempered steel. The invention is also suitable for castings of a large surface area and/or a thick wall, because surface defects can be minimized and segregation of impurities up to the surface can be avoided, thanks to the purity of the material.

## Claims

1. A method for preparing raw material for casting iron or steel, wherein a charge containing raw materials for a casting is melted and cast into an object of desired shape, wherein the charge (1) is assembled of plate-like charge elements (1a, 1b, 1c...) with known compositions and dimensions by placing them on top of each other, and of an alloying component entity (2) with a known composition by means of which the composition of the charge is balanced to the desired precise composition, wherein the plate-like charge elements (1a, 1b, 1c...) are disc-like elements provided with a central hole, **characterized in that** the disc-like elements are stacked on top of each other around a vertical guiding element so that the vertical guiding element extends through the holes.

2. The method according to claim 1, **characterized in that** the charge elements (1a, 1b, 1c...) are made of iron or steel, and the alloying component entity (2) contains, for the most part, metal other than iron, and/or non-metal selected from at least one of the following: molybdenum, chromium, nickel, silicon, carbon such as graphite.

3. The method according to claim 2, **characterized in that** the alloying component entity (2) comprises alloying component pieces or an alloying component cartridge.

4. The method according to any of the preceding claims, **characterized in that** the lower end of the vertical guiding element is fixed to a bottom element (1f) supporting the charge elements, and it constitutes a lifting arm (4), by means of which the charge elements (1a, 1b, 1c...) are placed in a furnace (5), in which the charge is melted.

5. The method according to any of the preceding claims, **characterized in that** the alloying component cartridge contains alloying components in the form of powder or granules in a predetermined desired mixture ratio.

6. The method according to any of the preceding claims , **characterized in that** the alloying component entity (2), is placed in a space which is left within the stack formed by the disc-like elements and which is made up by the central holes.

7. The method according to claim 6 , **characterized in that** the alloying component entity (2) is placed in a space which is left within the stack formed by the disc-like elements and which is made up by the central holes inside the tubular guiding element or lifting arm (4).

8. The method according to any of the preceding claims, **characterized in that** the charge elements are obtained from raw materials which are purified of impurities and alloying components.

## Patentansprüche

1. Verfahren für die Vorbereitung von Rohmaterial zum Gießen von Eisen oder Stahl, wobei eine Rohmaterialien enthaltende Beschickung für einen Guss geschmolzen und in ein Objekt gewünschter Form gegossen wird, wobei die Beschickung (1) zusammengesetzt ist aus plattenförmigen Beschickungselementen (1a, 1b, 1c ...) mit bekannten Zusammensetzungen und Abmessungen, indem sie aufeinander angeordnet werden, und aus einem Legierungselementengebilde (2) mit einer bekannten Zusammensetzung, mittels derer die Zusammensetzung der Beschickung auf die gewünschte genaue Zusammensetzung abgeglichen wird, wobei die plattenförmigen Beschickungselemente (1a, 1b, 1c ...) scheibenförmige Elemente sind, die mit einem mittigen Loch bereitgestellt werden, **dadurch gekennzeichnet, dass** die scheibenförmigen Elemente so um ein senkrechtes Führungselement herum aufeinander gestapelt sind, dass sich das senkrechte Führungselement durch die Löcher hindurch erstreckt.

2. Verfahren nach Anspruch 1, **dadurch gekennzeichnet, dass** die Beschickungselemente (1a, 1b, 1c ...) aus Eisen oder Stahl hergestellt sind und das Legierungselementengebilde (2) größtenteils ein anderes Metall als Eisen und/oder ein Nichtmetall enthält, ausgewählt aus mindestens einem von Folgendem: Molybdän, Chrom, Nickel, Silicium, Kohlenstoff wie z. B. Graphit.

3. Verfahren nach Anspruch 2, **dadurch gekennzeichnet, dass** das Legierungselementengebilde (2) Legierungselemententeile oder eine Legierungselementenpatrone umfasst.

4. Verfahren nach einem der vorhergehenden Ansprüche, **dadurch gekennzeichnet, dass** das untere Ende des senkrechten Führungselements an einem Bodenelement (1f), das die Beschickungselemente trägt, befestigt ist und es einen Hebearm (4) bildet, durch den die Beschickungselemente (1a, 1b, 1c ...) in einen Ofen (5) eingebracht werden, in dem die Beschickung geschmolzen wird.

5. Verfahren nach einem der vorhergehenden Ansprüche, **dadurch gekennzeichnet, dass** die Legierungselementenpatrone Legierungselemente in Form von Pulver oder Granulat in einem vorgegebenen gewünschten Mischungsverhältnis enthält.

6. Verfahren nach einem der vorhergehenden Ansprüche, **dadurch gekennzeichnet, dass** das Legierungselementengebilde (2) in einem Raum angeordnet ist, der innerhalb des aus scheibenförmigen Elementen gebildeten Stapels verbleibt und der durch die mittigen Löcher gebildet wird.

7. Verfahren nach Anspruch 6, **dadurch gekennzeichnet, dass** das Legierungselementengebilde (2) in einem Raum angeordnet ist, der innerhalb des aus scheibenförmigen Elementen gebildeten Stapels verbleibt und der durch die mittigen Löcher innerhalb des rohrförmigen Führungselements oder Hebearms (4) gebildet wird.

8. Verfahren nach einem der vorhergehenden Ansprüche, **dadurch gekennzeichnet, dass** die Beschickungselemente aus Rohmaterialien gewonnen werden, die von Verunreinigungen und Legierungselementen gereinigt sind.

## Revendications

1. Méthode pour préparer une matière première pour couler du fer ou de l'acier, dans laquelle une charge contenant des matières premières pour une coulée est fondue et coulée en un objet de forme souhaitée, dans laquelle la charge (1) est assemblée à partir d'éléments de charge de type plaque (1a, 1b, 1c...) présentant des compositions et dimensions connues en les plaçant les uns sur les autres, et d'une entité de constituant d'alliage (2) présentant une composition connue au moyen de laquelle la composition de la charge est équilibrée jusqu'à la composition précise souhaitée, dans laquelle les éléments de charge de type plaque (1a, 1b, 1c...) sont des éléments de type disque pourvus d'un trou central, **caractérisée en ce que** les éléments de type disque sont empilés les uns sur les autres autour d'un élément de guidage vertical de sorte à ce que l'élément de guidage vertical s'étende à travers les trous.

2. Méthode selon la revendication 1, **caractérisée en ce que** les éléments de charge (1a, 1b, 1c...) sont fait de fer ou d'acier, et l'entité de constituant d'alliage (2) contient, en majeure partie, un métal autre que le fer, et/ou un non-métal sélectionné parmi au moins l'un des éléments suivants : le molybdène, le chrome, le nickel, le silicium, le carbone tel que le graphite.

3. Méthode selon la revendication 2, **caractérisée en ce que** l'entité de constituant d'alliage (2) comprend des pièces de constituant d'alliage ou une cartouche de constituant d'alliage.

4. Méthode selon l'une quelconque des revendications précédentes, **caractérisée en ce que** l'extrémité inférieure de l'élément de guidage vertical est fixée sur un élément de fond (1f) soutenant les éléments de charge, et elle constitue un bras de levage (4), au moyen duquel les éléments de charge (1a, 1b, 1c...) sont placés dans un four (5), dans lequel la charge est fondue.

5. Méthode selon l'une quelconque des revendications précédentes, **caractérisée en ce que** la cartouche de constituant d'alliage contient des constituants d'alliage sous la forme de poudre ou de granules dans un rapport de mélange souhaité prédéterminé.

6. Méthode selon l'une quelconque des revendications précédentes, **caractérisée en ce que** l'entité de constituant d'alliage (2) est placée dans un espace qui est laissé au sein de l'empilement formé par les éléments de type disque et qui est constitué par les trous centraux.

7. Méthode selon la revendication 6, **caractérisée en ce que** l'entité de constituant d'alliage (2) est placée dans un espace qui est laissé au sein de l'empilement formé par les éléments de type disque et qui est formé par les trous centraux à l'intérieur de l'élément de guidage tubulaire ou du bras de levage (4).

8. Méthode selon l'une quelconque des revendications précédentes, **caractérisée en ce que** les éléments de charge sont obtenus à partir de matières premières qui sont purifiées d'impuretés et de constituants d'alliage.
